# EUROPEAN PATENT SPECIFICATION

(11) **EP 3 901 025 B1**
(45) Date of publication and mention of the grant of the patent: **28.09.2022**
(21) Application number: 20752385.3
(22) Date of filing: 06.02.2020
(51) Int. Cl.: B62M 25/08, F16H 61/02, B62M 11/06, B62J 45/415, F16H 59/50, F16H 63/46, B62J 45/412, F16H 59/44, F16H 59/36, F16H 61/16, F16H 61/20

(54) **LEAN VEHICLE**
NEIGEFAHRZEUG
VÉHICULE À FAIBLE ROULIS

(30) Priority: 06.02.2019 JP 2019019424
(43) Date of publication of application: 27.10.2021
(73) Proprietor: Yamaha Hatsudoki Kabushiki Kaisha, Iwata-shi, Shizuoka 438-8501 (JP)
(72) Inventor: OHATA, Shinobu, Iwata-shi, Shizuoka 438-8501 (JP)
(74) Representative: Stöckeler, Ferdinand
(86) International application number: PCT/JP2020/004668
(87) International publication number: WO 2020/162566

(56) References cited:
- EP-B1- 1 669 625
- WO-A1-2012/067234
- JP-A- H0 796 778
- JP-A- 2002 067 741
- JP-A- 2012 197 809
- JP-A- 2014 035 065

## Description

### TECHNICAL FIELD

The present teaching relates to a leaning vehicle that leans leftward when turning to the left and leans rightward when turning to the right.

### BACKGROUND ART

A known gear-shift controller of a motorcycle determines a transmission gear position from a vehicle state, such as vehicle speed, engine speed, or the like, and automatically performs a gear-shift of a transmission. As such a gear-shift controller, Patent Document 1 (Japanese Patent Application Publication No. 2002-67741), for example, discloses a gear-shift controller of a motorcycle including a multi-stage shift mechanism that includes a plurality of transmission gears, a shift clutch that disconnects rotation transfer when the transmission gears are changed, and an ECU that drives and controls the multi-stage shift mechanism and the shift clutch in accordance with an input command for a shift position. Patent Document 1 discloses the features of the preamble of claim 1.

The gear-shift controller disclosed in Patent Document 1 increases or reduces the engine speed in accordance with a shift direction in shift changing, and automatically obtains the input command for the shift position from detection data of an operation state of a vehicle. Specifically, in order to achieve smooth clutch engagement and disengagement in shift switching, the gear-shift controller controls the engine speed, for example, such that the engine speed is reduced during a shift-up and the engine speed is increased during a shift-down.

The gear-shift controller disclosed in Patent Document 1 can automatically disengage the clutch during deceleration without connecting a transmission gear having a maximum speed reduction ratio. Accordingly, for example, the vehicle can be stopped by disengaging the clutch in a second-speed state without performing a gear-shift from a shift position of the second speed to a shift position of a first speed (the maximum speed reduction ratio).

### CITATION LIST

### PATENT DOCUMENT

Patent Document 1: Japanese Patent Application Publication No. 2002-67741

### SUMMARY OF INVENTION

### PROBLEMS TO BE SOLVED BY INVENTION

The gear-shift controller disclosed in Patent Document 1 automatically disengages the clutch when the vehicle speed is reduced. This allows the engine to continuously rotate even when the vehicle speed has decreased.

In some cases, when a leaning vehicle including the gear-shift controller described above makes a U-turn with the clutch engaged, the clutch is disengaged and a driving force in a transmission is put in a non-transfer state as the engine speed is reduced during the U-turn. In this case, when the driving force is put in a transfer state again during the U-turn, the driving force of the leaning vehicle changes. Moreover, when the driving force is put in a non-transfer state during the U-turn, it takes time for the driving force to be generated in the leaning vehicle after the driver performs an acceleration operation.

As described above, when the driving force is put in a non-transfer state while making a turn, that is, for example, a U-turn or the like, it is difficult for the driver to control a posture of the leaning vehicle.

It is an object of the present teaching to provide a leaning vehicle that has a small posture change when turning and that a driver can easily operate during the turning.

### SOLUTION TO PROBLEM

The inventor of the present teaching performed studies on a leaning vehicle that has a little posture change and that a driver can easily operate while the leaning vehicle turns in a lean state.

Through an intensive study, the inventor of the present teaching has reached the following configuration.

A leaning vehicle according to one embodiment of the present teaching is a leaning vehicle that leans leftward when turning to the left and leans rightward when turning to the right. The leaning vehicle includes a vehicle body, a plurality of wheels including a front wheel and a rear wheel, a driving source configured to supply a driving force to at least one of the front wheel or the rear wheel, a vehicle body posture detector configured to detect a posture of the vehicle body, a gear-type multi-stage automatic transmission including a plurality of gear stages and a clutch configured to switch between a transfer state and a non-transfer state of the driving force from the driving source to the plurality of gear stages, and configured to change the driving force that is transferred to at least one of the front wheel or the rear wheel from the driving source by automatically changing the plurality of gear stages stepwise, and a gear-shift controller configured to control changing of the plurality of gear stages in the multi-stage automatic transmission and, if rotation speed of the driving source is smaller than a threshold, put the driving force in the non-transfer state in the multi-stage automatic transmission. The gear-shift controller sets, if it is determined based on a detection result of the vehicle body posture detector that the leaning vehicle is travelling in an upright state, the threshold at which the driving force is put in the non-transfer state in the multi-stage automatic transmission to a first threshold and sets, if it is determined based on the detection result of the vehicle body posture detector that the leaning vehicle is turning in a lean state, the threshold at which the driving force is put in the non-transfer state in the multi-stage automatic transmission to a second threshold that is smaller than the first threshold.

In some cases, when the leaning vehicle makes a turn, such as a U-turn or the like in a lean state, the driving force is put in a non-transfer state in the multi-stage automatic transmission as vehicle speed reduces. In this case, when the driving force is put in a transfer state again during the U-turn, the driving force of the leaning vehicle changes. Moreover, when the driving force is put in a non-transfer state during the U-turn, it takes time for the driving force to be generated in the leaning vehicle after the driver performs an acceleration operation. Therefore, it is difficult for the driver to control the posture of the leaning vehicle when turning.

On the other hand, in the configuration described above, if the leaning vehicle is turning in a lean state, the threshold of the rotation speed of the driving source at which the driving force is put in a non-transfer state in the multi-stage automatic transmission is set to a small value, as compared to a case where the leaning vehicle is travelling in an upright state. Thus, the driving force can be made less likely to be put in a non-transfer state in the multi-stage automatic transmission while the leaning vehicle is turning in a lean state.

Accordingly, in the above described configuration, the posture of the leaning vehicle can be easily controlled while the leaning vehicle is turning in a lean state. Therefore, according to the above described configuration, the leaning vehicle which the driver can easily operate while the leaning vehicle is turning in a lean state can be provided.

In another aspect, the leaning vehicle according to the present teaching preferably includes the following configuration. The gear-shift controller sets, if a lean angle obtained from the detection result of the vehicle body posture detector is a lean angle threshold or more, the threshold at which the driving force is put in the non-transfer state in the multi-stage automatic transmission to the second threshold that is smaller than the first threshold.

Whether the leaning vehicle is turning in a lean state can be determined based on the lean angle. Therefore, according to the above described configuration, the driving force can be made less likely to be put in a non-transfer state in the multi-stage automatic transmission while the leaning vehicle is turning in a lean state.

Accordingly, the posture of the leaning vehicle can be easily controlled while the leaning vehicle is turning in a lean state. Therefore, the leaning vehicle which the driver can easily operate while the leaning vehicle is turning in a lean state can be provided.

In another aspect, the leaning vehicle of the present teaching preferably includes the following configuration. The vehicle body posture detector includes a front wheel speed detector configured to detect rotation speed of the front wheel, and a rear wheel speed detector configured to detect rotation speed of the rear wheel. The gear-shift controller calculates the lean angle, based on a difference between the rotation speed of the front wheel detected by the front wheel speed detector and the rotation speed of the rear wheel detected by the rear wheel speed detector.

Thus, the lean angle of the leaning vehicle can be easily obtained.

In another aspect, the leaning vehicle according to the present teaching preferably includes the following configuration. The gear-shift controller sets, if a yaw rate obtained from the detection result of the vehicle body posture detector is a yaw rate threshold or more, the threshold at which the driving force is put in the non-transfer state in the multi-stage automatic transmission to the second threshold that is smaller than the first threshold.

Whether the leaning vehicle is turning in a lean state can be determined based on the yaw rate. Therefore, according to the above described configuration, the driving force can be made less likely to be put in a non-transfer state in the multi-stage automatic transmission while the leaning vehicle is turning in a lean state.

Accordingly, the posture of the leaning vehicle can be easily controlled while the leaning vehicle is turning in the lean state. Therefore, the leaning vehicle which the driver can easily operate while the leaning vehicle is turning in a lean state can be provided.

The terminology used herein is for the purpose of describing particular embodiments only and is not intended to be limiting of the invention.

As used herein, the term "and/or" includes any and all combinations of one or more of the associated listed items.

It will be further understood that the terms "including," "comprising" or "having" and variations thereof when used in this specification, specify the presence of stated features, steps, operations, elements, components, and/or their equivalents but do not preclude the presence or addition of one or more other features, steps, operations, elements, components, and/or groups thereof.

It will be further understood that the terms "mounted," "connected," "coupled," and/or their equivalents are used broadly and encompass both direct and indirect mounting, connecting and coupling. Further, "connected" and "coupled" are not restricted to physical or mechanical connections or couplings, and can include electrical connections or couplings, whether direct or indirect.

Unless otherwise defined, all terms (including technical and scientific terms) used herein have the same meaning as commonly understood by one having ordinary skill in the art to which this invention belongs.

It will be further understood that terms, such as those defined in commonly used dictionaries, should be interpreted as having a meaning that is consistent with their meaning in the context of the relevant art and the present disclosure and will not be interpreted in an idealized or overly formal sense unless expressly so defined herein.

In describing the invention, it will be understood that a number of techniques and steps are disclosed. Each of these has individual benefit and each can also be used in conjunction with one or more, or in some cases all, of the other disclosed techniques.

Accordingly, for the sake of clarity, this description will refrain from repeating every possible combination of the individual steps in an unnecessary fashion.

In this specification, embodiments of a leaning vehicle according to the present teaching will be described.

In the following description, for purposes of explanation, numerous specific details are set forth in order to provide a thorough understanding of the present teaching.

It will be evident, however, to one skilled in the art that the present teaching may be practiced without these specific details.

The present disclosure is to be considered as an exemplification of the invention, and is not intended to limit the invention to the specific embodiments illustrated by the figures or description below.

### [Leaning Vehicle]

A leaning vehicle herein is a vehicle that turns in a leaning posture. Specifically, the leaning vehicle is a vehicle that leans leftward when turning to the left and leans rightward when turning to the right in the left-right direction of the vehicle. The leaning vehicle may be a single-passenger vehicle or a vehicle on which a plurality of passengers can ride. The leaning vehicle includes all the types of vehicles that turn in leaning postures, such as three-wheeled vehicles and four-wheeled vehicles as well as two-wheeled vehicles.

### [Driving Source]

A driving source herein refers to a device that applies a driving force to wheels. The driving source includes, for example, a device capable of applying a driving force, such as an engine, a motor, and a hybrid system obtained by combining an engine and a motor.

### [Automatic Transmission]

An automatic transmission herein refers to a device that performs a gear-shift, based on a signal generated by a gear-shift controller. Thus, the automatic transmission performs a gear-shift without a gear-shift operation by a driver.

### [Changing of Gear Stage]

Changing of a gear stage herein refers to change of a gear stage of an automatic transmission. The changing includes both a shift-up in which changing to a gear stage having a small gear-shift ratio is performed and a shift-down in which changing to a gear stage having a large gear-shift ratio is performed.

### [Lean Angle]

A lean angle herein refers to an angle between a vertical line of a road surface and an up-down direction reference line of a leaning vehicle when the leaning vehicle turns in a lean state in which the leaning vehicle leans in a left-right direction with a rotation axis extending in a front-rear direction of the leaning vehicle as a center. The up-down direction reference line is a reference line extending in an up-down direction of the leaning vehicle.

### [Yaw Rate]

A yaw rate herein refers to a rate of change in a yaw angle of a leaning vehicle when the leaning vehicle turns in a lean state. The yaw angle refers to a rotation angle when the leaning vehicle rotates around a vertical axis passing the center of gravity.

### ADVANTAGEOUS EFFECTS OF INVENTION

One embodiment of the present teaching provides a leaning vehicle that has a small posture change when turning and that a driver can easily operate during the turning.

### BRIEF DESCRIPTION OF DRAWINGS

[FIG. 1] FIG. 1 is a left side view of a vehicle according to a first embodiment.
[FIG. 2] FIG. 2 is a cross-sectional view illustrating a schematic configuration of a multi-stage automatic transmission.
[FIG. 3] FIG. 3 is a cross-sectional view illustrating a schematic configuration of a shift mechanism.
[FIG. 4] FIG. 4 is a view illustrating a vehicle that turns leftward when seen from the front.
[FIG. 5] FIG. 5 is a block diagram illustrating a schematic configuration of a controller.
[FIG. 6] FIG. 6 is a flowchart illustrating an operation flow of gear-shift control by the controller.
[FIG. 7] FIG. 7 is a block diagram illustrating a variation of the first embodiment and corresponding to FIG. 5.
[FIG. 8] FIG. 8 is a flowchart illustrating a variation of the first embodiment and corresponding to FIG. 6.
[FIG. 9] FIG. 9 is a view illustrating a multi-stage automatic transmission of a vehicle according to a second embodiment and corresponding to FIG. 2.
[FIG. 10] FIG. 10 is a diagram schematically illustrating a configuration of a multi-stage automatic transmission.
[FIG. 11] FIG. 11 is a block diagram according to another embodiment and corresponding to FIG. 5.
[FIG. 12] FIG. 12 is a diagram illustrating respective examples of a left side view of a vehicle, a cross-sectional view of a multi-stage automatic transmission, and a block diagram of a controller.

### DESCRIPTION OF EMBODIMENTS

Embodiments will be described hereinafter with reference to the drawings. The dimensions of components in the drawings do not strictly represent actual dimensions of the components and dimensional proportions of the components, for example.

In the following description, arrow F in the drawings represents a forward direction of a vehicle. Arrow RR in the drawings represents a rearward direction of the vehicle. Arrow U in the drawings represents an upward direction of the vehicle. Arrow R in the drawings represents a rightward direction of the vehicle. Arrow L in the drawings represents a leftward direction of the vehicle. The front, rear, left, and right directions respectively refer to the front, rear, left, and right directions when seen from a driver driving the vehicle.

### (First Embodiment)

### <Overall Configuration>

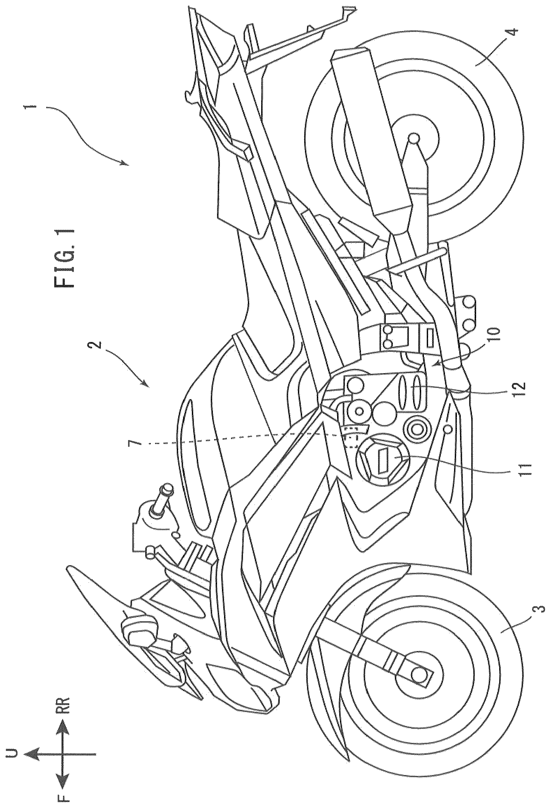

FIG. 1 illustrates a left side view of a vehicle 1 according to an embodiment of the present teaching. The vehicle 1 is, for example, a motorcycle. Specifically, the vehicle 1 is a leaning vehicle that leans leftward when turning to the left and leans rightward when turning to the right.

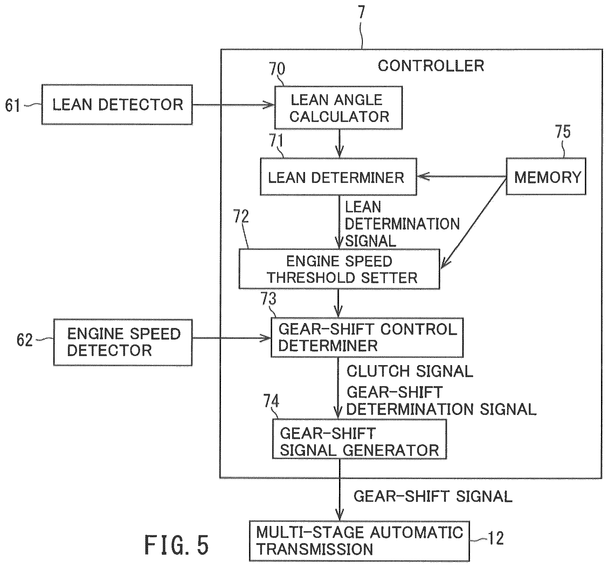

The vehicle 1 includes a vehicle body 2, a front wheel 3, a rear wheel 4, a controller 7, a lean detector 61, an engine speed detector 62, and an engine unit 10. The lean detector 61 and the engine speed detector 62 are illustrated in FIG. 5.

The engine unit 10 for supplying a rotation driving force to the rear wheel 4 is attached to the frame of the vehicle body 2. The engine unit 10 includes an engine 11 as an example of a driving source, and a multi-stage automatic transmission 12 that shifts the speed of rotation output from the engine 11. The configuration of the engine unit 10 will be specifically described later.

The controller 7 for controlling driving of the engine unit 10 is disposed in the vehicle body 2. The controller 7 is a so-called electric control unit (ECU), and controls driving of other components in the vehicle 1 as well as the engine unit 10.

The lean detector 61 and the engine speed detector 62 are also disposed in the vehicle body 2. The lean detector 61 detects information on a leaning posture of the vehicle 1. That is, the lean detector 61 functions as a vehicle body posture detector.

In this embodiment, the lean detector 61 is, for example, an inertial measurement unit (IMU), and detects a lean angular velocity that is an angular velocity when the vehicle 1 leans with respect to a vertical axis. The lean detector 61 may be configured to detect at least one of an angular velocity (pitch angular velocity) when the vehicle 1 leans forward or rearward about a rotation axis extending in the left-right direction of the vehicle 1 or an angular velocity (yaw rate) when the vehicle 1 rotates about the vertical axis.

The engine speed detector 62 detects engine speed of the engine 11 of the engine unit 10.

Note that a vehicle speed detector that detects the vehicle speed of the vehicle 1 and a throttle opening degree detector that detects an opening degree of a throttle valve may be also provided in the vehicle body 2.

### <Engine Unit>

Next, a configuration of the engine unit 10 will be described.

The engine unit 10 includes the engine 11 and the multi-stage automatic transmission 12. The engine 11 has a configuration similar to that of a typical engine. Thus, the engine 11 will not be described in detail.

The multi-stage automatic transmission 12 includes a plurality of gear stages and automatically changes the gear stages stepwise to thereby change a driving force to be transferred from the engine 11 to the rear wheel 4. Specifically, the multi-stage automatic transmission 12 includes a transmission mechanism 20, a clutch 40, and a shift mechanism 50.

The term of automatically changing the gear stages stepwise refers to changing to a next gear stage having a large gear-shift ratio or a next gear stage having a small gear-shift ratio without a gear-shift operation by a driver of the vehicle 1. At this time, an instruction signal instructing changing of the gear stages may be input, or may not be input, from the driver of the vehicle 1 to the multi-stage automatic transmission 12.

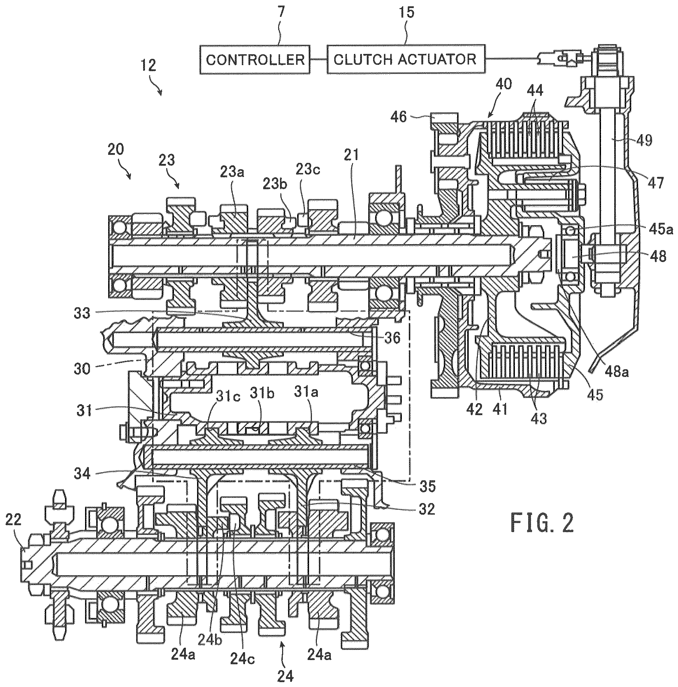

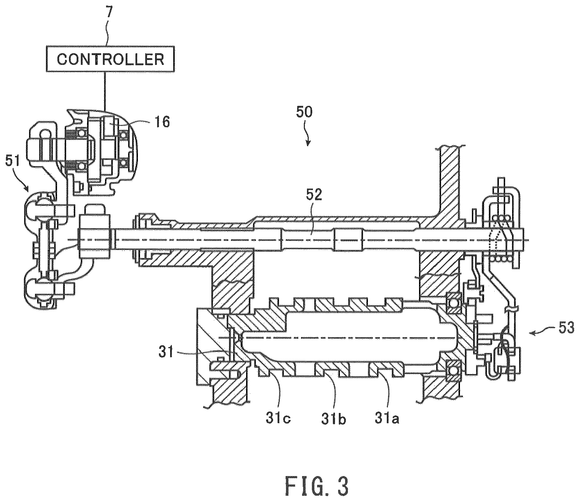

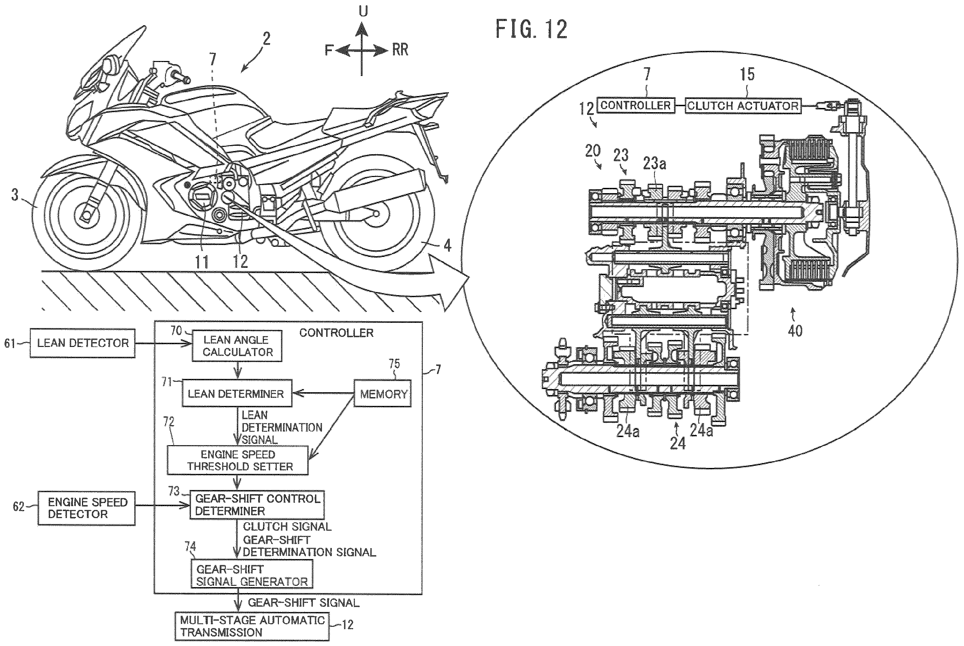

FIG. 2 illustrates schematic configurations of the transmission mechanism 20 and the clutch 40 of the multi-stage automatic transmission 12. FIG. 3 illustrates a schematic configuration of the shift mechanism 50 of the multi-stage automatic transmission 12. FIG. 12 illustrates schematic configurations of the vehicle 1 and the multi-stage automatic transmission 12. FIG. 12 also illustrates a block diagram of the controller 7 described later. Since FIG. 12 corresponds to FIGS. 1, 2, and 5, a detailed description of FIG. 12 will be omitted.

The transmission mechanism 20 is connected to a crankshaft, not shown, of the engine 11. The transmission mechanism 20 changes a torque transferred from the crankshaft to a predetermined torque, and outputs the predetermined torque.

The clutch 40 is configured to transmit rotation of the crankshaft to the transmission mechanism 20. That is, the clutch 40 is configured to switch between transfer and non-transfer of rotation of the crankshaft to the transmission mechanism 20.

The shift mechanism 50 performs a gear-shift of the transmission mechanism 20 through a sequential shift mechanism 30 described later, and retains a gear stage selected by the transmission mechanism 20 until the next gear-shift is performed by the transmission mechanism 20.

As described above, a driving force is transferred to the transmission mechanism 20 of the multi-stage automatic transmission 12 from the engine 11 through the clutch 40.

With reference to FIG. 2 and FIG. 3, the configuration of the multi-stage automatic transmission 12 including the transmission mechanism 20, the clutch 40, and the shift mechanism 50 will be described in detail.

The clutch 40 is, for example, a multiplate friction clutch. The clutch 40 includes a bottomed cylindrical clutch housing 41, a bottomed cylindrical clutch boss 42, a plurality of friction plates 43 that are friction discs, a plurality of clutch plates 44 that are friction discs, a pressure plate 45, and an input gear 46. The clutch 40 is not limited to a multiplate friction clutch as described in this embodiment. The clutch 40 may be an automatic centrifugal clutch, for example, using a centrifugal weight.

The clutch housing 41 is disposed concentrically with a main shaft 21 of the transmission mechanism 20 and is rotatable relative to the main shaft 21. A bottom portion of the bottomed cylindrical clutch housing 41 is connected to the input gear 46. The input gear 46 meshes with a gear (not shown) disposed on the crankshaft of the engine 11 to thereby rotate together with the gear. The clutch housing 41 and the input gear 46 rotate together with the crankshaft, and are rotatable with respect to the main shaft 21 of the transmission mechanism 20.

The plurality of friction plates 43 as ring-shaped thin plates are arranged inside the clutch housing 41. The plurality of friction plates 43 are arranged in the thickness direction inside the clutch housing 41. The plurality of friction plates 43 are attached to the inner peripheral surface of the clutch housing 41 to be rotatable together with the clutch housing 41 and displaceable with respect to the clutch housing 41 along the axial direction of the main shaft 21.

An end portion of the main shaft 21 penetrates the bottom portion of the clutch housing 41. A bottom portion of the clutch boss 42 is fixed to a front end portion of the main shaft 21 penetrating the clutch housing 41. Accordingly, the clutch boss 42 rotates together with the main shaft 21.

The clutch boss 42 is disposed inside the clutch housing 41. The plurality of clutch plates 44 as ring-shaped thin plates are disposed on an outer peripheral portion of the clutch boss 42. That is, the plurality of clutch plates 44 are attached to the outer peripheral surface of the clutch boss 42 to be rotatable together with the clutch boss 42 and displaceable with respect to the clutch boss 42 along the axial direction of the main shaft 21.

The plurality of friction plates 43 and the plurality of clutch plates 44 are alternately arranged along the axial direction of the main shaft 21.

The pressure plate 45 is a substantially disc-shaped member. The clutch housing 41, the clutch boss 42, and the pressure plate 45 are arranged in this order with respect to the main shaft 21 along the axial direction of the main shaft 21. The pressure plate 45 is disposed outside the main shaft 21 in the axial direction to face the clutch boss 42 in the axial direction. The pressure plate 45 is displaceable with respect to the clutch boss 42 along the axial direction of the main shaft 21 and is also pressed by a clutch spring 47 toward the clutch boss 42.

As described above, when the pressure plate 45 is pressed toward the clutch boss 42, each of the friction plates 43 and each of the clutch plates 44 are thereby pushed against each other in the thickness direction. That is, the plurality of friction plates 43 and the plurality of clutch plates 44 are engaged with one another. As described above, while the plurality of friction plates 43 and the plurality of clutch plates 44 are engaged, the clutch boss 42 and the clutch housing 41 rotate as one unit by friction between the friction plates 43 and the clutch plates 44. This state is an engaged state of the clutch 40, that is, a transfer state in which a driving force is transferred.

In this engaged state of the clutch 40, rotation is allowed to be transferred from the clutch housing 41 to the clutch boss 42, that is, from the input gear 46 to the main shaft 21, through each of the friction plates 43 and each of the clutch plates 44.

A push rod 48 penetrates a center portion of the pressure plate 45 when seen in the axial direction of the main shaft 21. The push rod 48 is disposed to extend in the axial direction of the main shaft 21. That is, the axial direction of the push rod 48 coincides with the axial direction of the main shaft 21. A flange 48a is provided on one end of the push rod 48. The other end of the push rod 48 is connected to a rod 49. The rod 49 is rotatable about the axis by a clutch actuator 15. The clutch actuator 15 is driven and controlled based on a clutch signal output from the controller 7.

The push rod 48 is configured to be movable along the axial direction of the main shaft 21 by rotation of the rod 49. In a case where the push rod 48 moves in a direction away from the main shaft 21 (rightward in FIG. 2), the pressure plate 45 receives a force in a direction away from the clutch boss 42 in the axial direction by the flange 48a of the push rod 48. Accordingly, the clutch spring 47 is deformed to be compressed, and thus, a force with which the pressure plate 45 pushes the friction plates 43 and the clutch plates 44 decreases.

Consequently, a contact pressure between the friction plates 43 and the clutch plates 44 decreases. In this manner, the friction plates 43 and the clutch plates 44 are disengaged, and the clutch boss 42 and the clutch housing 41 rotate relative to each other. This state is a disengaged state of the clutch 40, that is, a non-transfer state in which a driving force is not transferred.

That is, the clutch 40 is switched between the engaged state and the disengaged state by movement of the push rod 48 along the axial direction of the main shaft 21.

The pressure plate 45 is rotatable about the push rod 48 with a bearing 45a interposed therebetween. Accordingly, while the clutch 40 is in the engaged state, the pressure plate 45 rotates together with the clutch housing 41 and the clutch boss 42.

The transmission mechanism 20 is a multistep transmission mechanism. The transmission mechanism 20 includes the main shaft 21, an output shaft 22 disposed in parallel with the main shaft 21, a plurality of driving gears 23, a plurality of driven gears 24, and the sequential shift mechanism 30. The sequential shift mechanism 30 includes a shift cam 31, shift forks 32 through 34, and guide shafts 35 and 36 for guiding movement of the shift forks 32 through 34.

The main shaft 21 is provided with the plurality of driving gears 23. The plurality of driving gears 23 are transmission gears constituting part of the plurality of gear stages. On the other hand, the output shaft 22 is provided with the plurality of driven gears 24 always meshing with the plurality of driving gears 23. The plurality of driven gears 24 are transmission gears constituting part of the plurality of gear stages. The transmission mechanism 20 is a so-called gear-type transmission mechanism in which the plurality of driving gears 23 and the plurality of driven gears 24 always mesh with each other in a one-to-one relationship.

In the transmission mechanism 20, in accordance with the gear stage, the sequential shift mechanism 30 selects a combination of a driving gear 23 and a driven gear 24 for transferring a driving force among the plurality of driving gears 23 and the plurality of driven gears 24.

Specifically, a predetermined driving gear 23a in the plurality of driving gears 23 is fixed to the main shaft 21 in the rotation direction, while being movable along the axial direction of the main shaft 21. Predetermined driven gears 24a in the plurality of driven gears 24 are fixed to the output shaft 22 in the rotation direction, while being movable along the axial direction of the output shaft 22. Positions of the predetermined driving gear 23a and the predetermined driven gears 24a in the axial direction are determined by the sequential shift mechanism 30 in accordance with the gear stage.

The driving gears 23, except for the predetermined driving gear 23a in the plurality of driving gears 23, include driving gears 23 fixed to the main shaft 21 in the axial direction and rotatable with respect to the main shaft 21, and driving gears 23 fixed to the main shaft 21 in the axial direction and rotatable together with the main shaft 21. Driven gears 24, except for the predetermined driven gears 24a in the plurality of driven gears 24, are fixed to the output shaft 22 in the axial direction and rotatable with respect to the output shaft 22.

A configuration of the transmission mechanism 20 is similar to a configuration of a known transmission mechanism (e.g., Japanese Patent Application Publication No. 2015-117798), and thus, will not be described in detail.

The sequential shift mechanism 30 includes the shift cam 31 and the shift forks 32 through 34. As illustrated in FIG. 3, cam grooves 31a through 31c are formed on the outer peripheral surface of the shift cam 31 of the sequential shift mechanism 30. The cam grooves 31a through 31c are arranged along the axial direction of the shift cam 31 such that each of the cam grooves 31a through 31c extends circumferentially on the outer peripheral surface of the shift cam 31. The cam grooves 31a through 31c are arranged on the outer peripheral surface of the shift cam 31 such that positions of the cam grooves 31a through 31c in the axial direction of the shift cam 31 change in accordance with the positions thereof in the circumferential direction of the shift cam 31. One end of each of the shift forks 32 through 34 is located in an associated one of the cam grooves 31a through 31c. Configurations of the cam grooves 31a through 31c of this embodiment are similar to those of known cam grooves (e.g., Japanese Patent Application Publication No. 2015-117798), and thus, will not be described in detail.

As illustrated in FIG. 2, the shift forks 32 through 34 are disposed on the guide shafts 35 and 36 parallel to the axis of the shift cam 31 and are movable along the axial direction of the guide shafts 35 and 36. The other end of each of the shift forks 32 through 34 is connected to the predetermined driving gear 23a and the predetermined driven gears 24a. Accordingly, when the shift cam 31 rotates, the shift forks 32 through 34 move in the axial direction of the shift cam 31 along the cam grooves 31a through 31c on the outer peripheral surface of the shift cam 31. Thus, with the rotation of the shift cam 31, positions of the predetermined driving gear 23a and the predetermined driven gears 24a in the axial direction are determined through the shift forks 32 through 34.

The predetermined driving gear 23a and the driving gear 23 adjacent to the predetermined driving gear 23a in the axial direction of the main shaft 21 respectively include dogs 23b and 23c that mesh with each other. Each of the predetermined driven gears 24a and the driven gear 24 adjacent to the predetermined driven gear 24a in the axial direction of the output shaft 22 respectively include dogs 24b and 24c that mesh with each other. As described above, with the rotation of the shift cam 31, when the predetermined driving gear 23a moves along the axial direction through the shift fork 33, the dog 23b of the predetermined driving gear 23a meshes with the dog 23c of the driving gear 23 adjacent to the predetermined driving gear 23a in the axial direction of the main shaft 21. With the rotation of the shift cam 31, when each of the predetermined driven gears 24a moves along the axial direction through its corresponding one of the shift forks 32 or 34, the dog 24b of the predetermined driven gear 24a meshes with the dog 24c of the driven gear 24 adjacent to the predetermined driven gear 24a in the axial direction of the output shaft 22.

Accordingly, a combination of the driving gear 23 and the driven gear 24 for transferring a driving force from the main shaft 21 to the output shaft 22 is selected. That is, in the transmission mechanism 20, in a case where the predetermined driving gear 23a moves along the axial direction through the shift fork 33 in accordance with the rotation of the shift cam 31, the driving gear 23 associated with a specific gear stage (i.e., gear stage except for the predetermined gear stage) in the plurality of driving gears 23 is fixed to the main shaft 21 by the predetermined driving gear 23a to rotate together with the main shaft 21. On the other hand, in a case where the predetermined driven gear 24a moves along the axial direction through the shift forks 32 and 34 in accordance with the rotation of the shift cam 31, the driven gear 24 associated with a specific gear stage (i.e., gear stage except for the predetermined gear stage) in the plurality of driven gears 24 is fixed to the output shaft 22 by the predetermined driven gear 24a to rotate together with the output shaft 22.

In the manner described above, only the driving gear 23 and the driven gear 24 associated with the specific gear stage in the transmission mechanism 20 transfer a driving force from the main shaft 21 to the output shaft 22. Accordingly, the transmission mechanism 20 transfers a driving force output from the engine 11 from the main shaft 21 to the output shaft 22 at a predetermined gear-shift ratio in each gear stage.

The shift mechanism 50 causes the shift cam 31 of the transmission mechanism 20 to rotate in accordance with a gear-shift signal output from the controller 7. The shift mechanism 50 is driven by a shift actuator 16. The shift actuator 16 is driven and controlled based on a gear-shift signal output from the controller 7.

The shift mechanism 50 includes a shift rod 51, a shift shaft 52, and an intermittent feeder 53. A driving force of the shift actuator 16 is transferred to the shift rod 51. One end of the shift shaft 52 is connected to the shift rod 51. The other end of the shift shaft 52 is connected to the shift cam 31 through the intermittent feeder 53. The shift actuator 16 causes the shift shaft 52 to rotate in a predetermined direction through the shift rod 51 based on a gear-shift signal output from the controller 7. This predetermined direction is switched in opposite directions between a shift-up (changing to a gear stage having a smaller gear-shift ratio) and a shift-down (changing to a gear stage having a larger gear-shift ratio).

The shift shaft 52 rotates with a driving force of the shift actuator 16 to thereby cause the shift cam 31 to rotate about the axis through the intermittent feeder 53. When the shift shaft 52 rotates in a predetermined direction, the intermittent feeder 53 causes the shift cam 31 to rotate by a certain angle in a rotation direction corresponding to the predetermined direction. A configuration of the intermittent feeder 53 is similar to a known configuration (e.g., Japanese Patent Application Publication No. 2015-117798). Thus, the configuration of the intermittent feeder 53 will not be described in detail.

With the configuration described above, when the shift actuator 16 is driven based on a gear-shift signal output from the controller 7, a driving force of the shift actuator 16 causes the shift shaft 52 to rotate in a predetermined direction through the shift rod 51. In accordance with the rotation direction of the shift shaft 52, the intermittent feeder 53 causes the shift cam 31 to rotate by a certain angle in a rotation direction corresponding to the predetermined direction.

Accordingly, in the transmission mechanism 20, the shift forks 32 through 34 move in the axial direction of the shift cam 31 along the cam grooves 31a through 31c on the shift cam 31. With such movement of the shift forks 32 through 34, the predetermined driving gear 23a and the driving gear 23 associated with the gear stage are engaged through the dogs 23b and 23c thereof, whereas the predetermined driven gear 24a and the driven gear 24 associated with the gear stage are engaged through the dogs 24b and 24c thereof. Consequently, the transmission mechanism 20 can transfer a driving force at a gear-shift ratio of each gear stage from the main shaft 21 to the output shaft 22 through the driving gear 23 and the driven gear 24 associated with the gear stage.

### <Controller>

The controller 7 controls driving of components of the vehicle 1, such as the engine unit 10. The controller 7 is, for example, an electric control unit (ECU). In this embodiment, the controller 7 generates a gear-shift signal for instructing changing of gear stages and outputs the gear-shift signal to the multi-stage automatic transmission 12. The controller 7 of this embodiment controls driving of the multi-stage automatic transmission 12, based on engine speed and a lean angle of the vehicle 1. That is, the controller 7 constitutes a gear-shift controller.

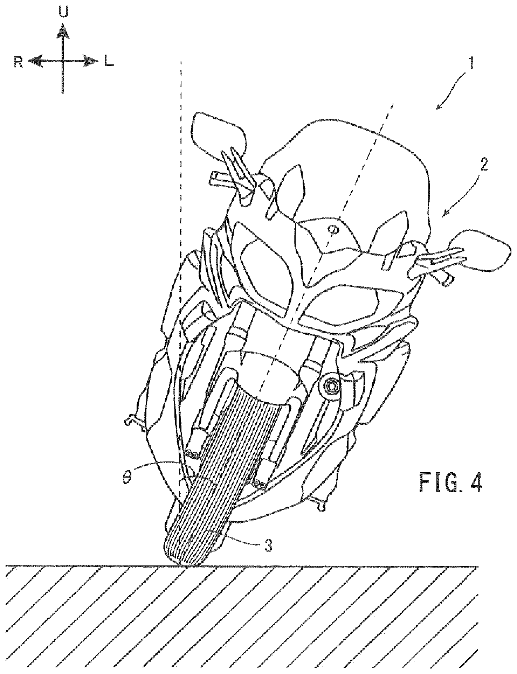

In this embodiment, the vehicle 1 leans leftward when turning to the left and leans rightward when turning to the right. FIG. 4 is a view of the vehicle 1 that turns leftward, when seen from the front. As illustrated in FIG. 4, while the vehicle 1 turns, the vehicle 1 leans at a predetermined lean angle θ with respect to a vertical axis (broken line in FIG. 4).

In some cases, when the vehicle 1 turns leftward while leaning to the left or turns rightward while leaning to the right as described above, a driving force is put in a non-transfer state in the multi-stage automatic transmission 12 as the vehicle speed of the vehicle 1 decreases. When the driving force is put in a non-transfer state, it takes time for the driving force to be generated in the vehicle 1 after the driver performs an acceleration operation. Therefore, it is difficult for the driver to control the posture of the vehicle 1 when the vehicle 1 turns.

In contrast, if the vehicle 1 is turning in a lean state, the controller 7 of this embodiment sets a threshold of the engine speed at which the driving force is put in a non-transfer state to a small value, as compared to a case where the vehicle 1 is traveling in an upright state.

Note that the phrase "the driving force is put in a non-transfer state in the multi-stage automatic transmission 12" means a case where the clutch 40 is put in a disengaged state or a state where the driving force is not transferred in the plurality of gear stages of the transmission mechanism 20 (neutral). In this embodiment, as an example in which the driving force is put in a non-transfer state in the multi-stage automatic transmission 12, a case where the clutch 40 is put in a disengaged state will be described.

FIG. 5 is a block diagram illustrating a schematic configuration of the controller 7. The controller 7 includes a lean angle calculator 70, a lean determiner 71, an engine speed threshold setter 72, a gear-shift control determiner 73, a gear-shift signal generator 74, and a memory 75.

The lean angle calculator 70 calculates a lean angle from the lean angular velocity detected by the lean detector 61.

The lean determiner 71 determines whether the vehicle 1 is turning in a lean state, based on the lean angle calculated by the lean angle calculator 70. Specifically, if the lean angle calculated by the lean angle calculator 70 is smaller than a lean angle threshold, the lean determiner 71 determines that the vehicle 1 is travelling in an upright state and generates a lean determination signal of "upright state."

If the lean angle calculated by the lean angle calculator 70 is the lean angle threshold or more, the lean determiner 71 determines that the vehicle 1 is turning in a lean state and generates a lean determination signal of "lean state."

The engine speed threshold setter 72 sets an engine speed threshold (threshold) at which the clutch 40 of the multi-stage automatic transmission 12 is disengaged. If the vehicle 1 is turning in a lean state, the engine speed threshold setter 72 sets the engine speed threshold to a small value, as compared to a case where the vehicle 1 is travelling in an upright state.

Specifically, if the lean determination signal output from the lean determiner 71 is the lean determination signal of "upright state," the engine speed threshold setter 72 sets the engine speed threshold at which the clutch 40 of the multi-stage automatic transmission 12 is disengaged to a first engine speed threshold (a first threshold).

If the lean determination signal output from the lean determiner 71 is the lean determination signal of "lean state," the engine speed threshold setter 72 sets the engine speed threshold at which the clutch 40 of the multi-stage automatic transmission 12 is disengaged to a second engine speed threshold (a second threshold) that is smaller than the first engine speed threshold.

That is, the engine speed threshold setter 72 determines a lean state of the vehicle 1, based on a detection result of the lean determiner 71. If the vehicle 1 is turning in a lean state, the engine speed threshold setter 72 sets the threshold of the engine speed at which the clutch 40 is disengaged to a small value, as compared to a case where the vehicle 1 is traveling in an upright state. Thus, the clutch 40 can be made less likely to be disengaged while the vehicle 1 is turning in a lean state.

If the engine speed detected by the engine speed detector 62 is smaller than the engine speed threshold, the gear-shift control determiner 73 generates a clutch signal for disengaging the clutch 40. Note that the gear-shift control determiner 73 also generates a gear-shift determination signal for permitting changing of the gear stages in accordance with the engine speed and the vehicle speed.

The lean angle threshold, the first engine speed threshold, and the second engine speed threshold are stored in the memory 75.

The gear-shift signal generator 74 generates a gear-shift signal for instructing disengagement of the clutch 40 to the multi-stage automatic transmission 12 in accordance with the clutch signal output from the gear-shift control determiner 73. The gear-shift signal generator 74 also generates a gear-shift signal for instructing changing of the gear stages, based on a gear-shift determination signal output from the gear-shift control determiner 73.

The generation of the gear-shift signal by the gear-shift signal generator 74 is similar to the generation of a gear-shift signal in general gear-shift control, and thus, will not be described in detail. The gear-shift signal generated by the gear-shift signal generator 74 is output to the multi-stage automatic transmission 12. In the multi-stage automatic transmission 12, driving of the clutch actuator 15 and the shift actuator 16 is controlled based on the gear-shift signal.

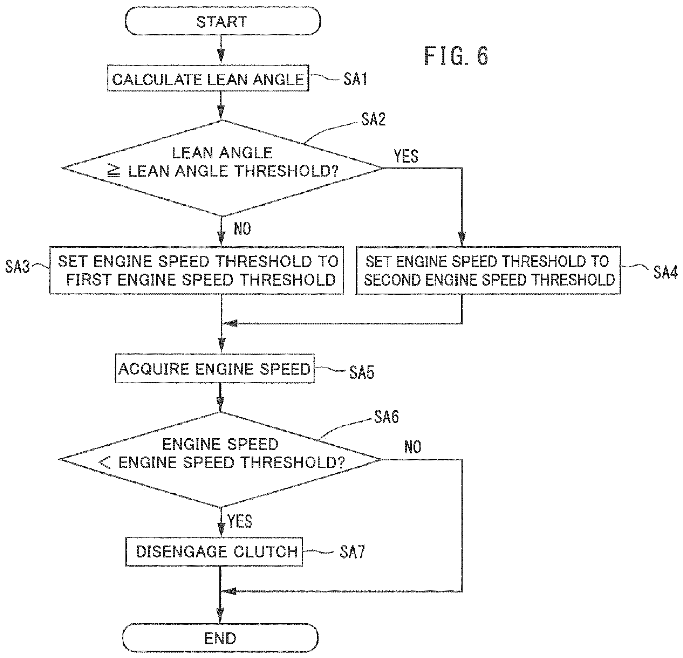

Next, gear-shift control by the controller 7 having the configuration as described above will be described. FIG. 6 illustrates an operation flow of gear-shift control by the controller 7.

When the flow illustrated in FIG. 6 starts, the controller 7 acquires the lean angular velocity of the vehicle 1 by the lean detector 61 and calculates a lean angle by the lean angle calculator 70 (Step SA1).

The lean determiner 71 of the controller 7 determines whether the calculated lean angle is the lean angle threshold stored in the memory 75 or more (Step SA2). If the lean determiner 71 determines that the lean angle is smaller than the lean angle threshold (NO in Step SA2), the lean determiner 71 generates a lean determination signal of "upright state." If the lean determination signal is "upright state," the engine speed threshold setter 72 sets the engine speed threshold to the first engine speed threshold stored in the memory 75 (Step SA3).

On the other hand, if the lean determiner 71 determines that the lean angle is the lean angle threshold or more (YES in Step SA2), the lean determiner 71 generates a lean determination signal of "lean state." If the lean determination signal is "lean state," the engine speed threshold setter 72 sets the engine speed threshold to the second engine speed threshold stored in the memory 75 (Step SA4).

Next, the controller 7 acquires the engine speed of the engine 11 of the vehicle 1 detected by the engine speed detector 62 (Step SA5).

The gear-shift control determiner 73 determines whether the acquired engine speed is smaller than the engine speed threshold set in Step SA3 or Step SA4 (Step SA6). If the gear-shift control determiner 73 determines that the engine speed is smaller than the engine speed threshold (YES in Step SA6), the gear-shift control determiner 73 generates a clutch signal for disengaging the clutch 40 (Step SA7). If the gear-shift control determiner 73 determines that the engine speed is the engine speed threshold or more (NO in Step SA6), the controller 7 terminates gear-shift control in accordance with this flow.

After processing of Step SA7, the controller 7 terminates the operation in accordance with this flow.

In the manner described above, if the vehicle 1 is turning in a lean state, the threshold of the engine speed of the engine 11 at which the clutch 40 is disengaged is set to a small value, as compared to a case where the vehicle 1 is travelling in an upright state. Thus, while the vehicle 1 is turning in a lean state, the clutch 40 is less likely to be disengaged.

Accordingly, while the vehicle 1 is turning in a lean state, the posture of the vehicle 1 can be easily controlled. Therefore, with the above described configuration, the vehicle 1 that the driver can easily operate while the vehicle 1 is turning in a lean state can be provided.

### (Variation of First Embodiment)

In the first embodiment, whether the vehicle 1 is turning in a lean state is determined based on the lean angular velocity of the vehicle 1 detected by the lean detector 61.

However, a yaw rate of the vehicle 1 may be detected by the lean detector 61 and whether the vehicle 1 is turning in a lean state may be determined based on the yaw rate.

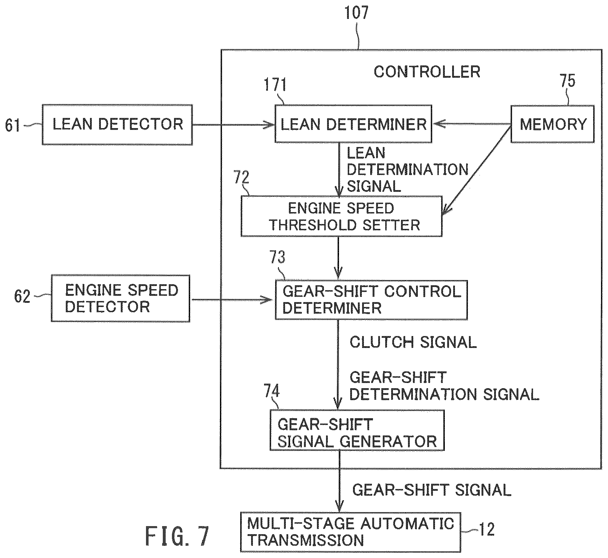

FIG. 7 is a block diagram of a controller 107 according to this variation. The controller 107 is different from the controller 7 of the first embodiment in a point that a lean determiner 171 determines whether the vehicle 1 is turning in a lean state using the yaw rate detected by the lean detector 61. In the following description, components similar to those of the first embodiment are denoted by the same reference characters and will not be described again, and only components different from those of the first embodiment will be described.

If the yaw rate detected by the lean detector 61 is smaller than a yaw rate threshold, the lean determiner 171 determines that the vehicle 1 is travelling in an upright state and generates a lean determination signal of "upright state."

If the yaw rate detected by the lean detector 61 is the yaw rate threshold or more, the lean determiner 171 determines that the vehicle 1 is turning in a lean state and generates a lean determination signal of "lean state."

The yaw rate threshold is stored in the memory 75.

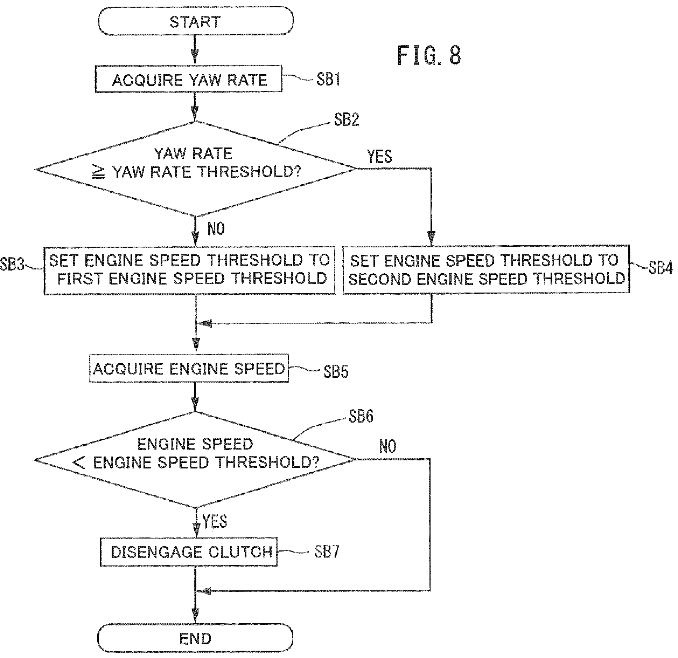

FIG. 8 is a flowchart illustrating an operation flow of the controller 107 in this variation. In the following description, the operation of the controller 107 in this variation will be described using FIG. 8.

When the flow illustrated in FIG. 8 starts, the controller 107 acquires the yaw rate of the vehicle 1 detected by the lean detector 61 (Step SB1).

The lean determiner 171 of the controller 107 determines whether the acquired yaw rate is the yaw rate threshold stored in the memory 75 or more (Step SB2). If the lean determiner 171 determines that the yaw rate is smaller than the yaw rate threshold (NO in Step SB2), the lean determiner 171 generates a lean determination signal of "upright state." If the lean determination signal is a lean determination signal of "upright state," the engine speed threshold setter 72 sets the engine speed threshold to the first engine speed threshold stored in the memory 75 (Step SB3).

On the other hand, if the lean determiner 171 determines that the yaw rate is the yaw rate threshold or more (YES in Step SB2), the lean determiner 171 generates a lean determination signal of "lean state." If the lean determination signal is a lean determination signal of "lean state," the engine speed threshold setter 72 sets the engine speed threshold to the second engine speed threshold stored in the memory 75 (Step SB4).

Next, the controller 107 acquires the engine speed of the engine 11 of the vehicle 1 detected by the engine speed detector 62 (Step SB5).

The gear-shift control determiner 73 determines whether the acquired engine speed is smaller than the engine speed threshold set in Step SB3 or Step SB4 (Step SB6). If the gear-shift control determiner 73 determines that the engine speed is smaller than the engine speed threshold (YES in Step SB6), the gear-shift control determiner 73 generates a clutch signal for disengaging the clutch 40 (Step SB7). If the gear-shift control determiner 73 determines that the engine speed is the engine speed threshold or more (NO in Step SB6), the controller 107 terminates gear-shift control in accordance with this flow.

After processing of Step SB7, the controller 107 terminates the operation in accordance with this flow.

In the manner described above, whether the vehicle 1 is turning in a lean state is determined based on the yaw rate and, if the yaw rate is the yaw rate threshold or more, that is, if the vehicle 1 is turning in a lean state, the engine speed threshold at which the clutch 40 is disengaged is set to the second engine speed threshold that is smaller than the first engine speed threshold at which the clutch 40 is disengaged while the vehicle 1 is travelling in an upright state. Thus, the clutch 40 can be made less likely to be disengaged while the vehicle 1 is turning in a lean state.

Accordingly, with the above described configuration, the posture of the vehicle 1 can be easily controlled while the vehicle 1 is turning in a lean state. Therefore, with the above described configuration, the vehicle 1 that the driver can easily operate while the vehicle 1 is turning in a lean state can be provided.

### (Second Embodiment)

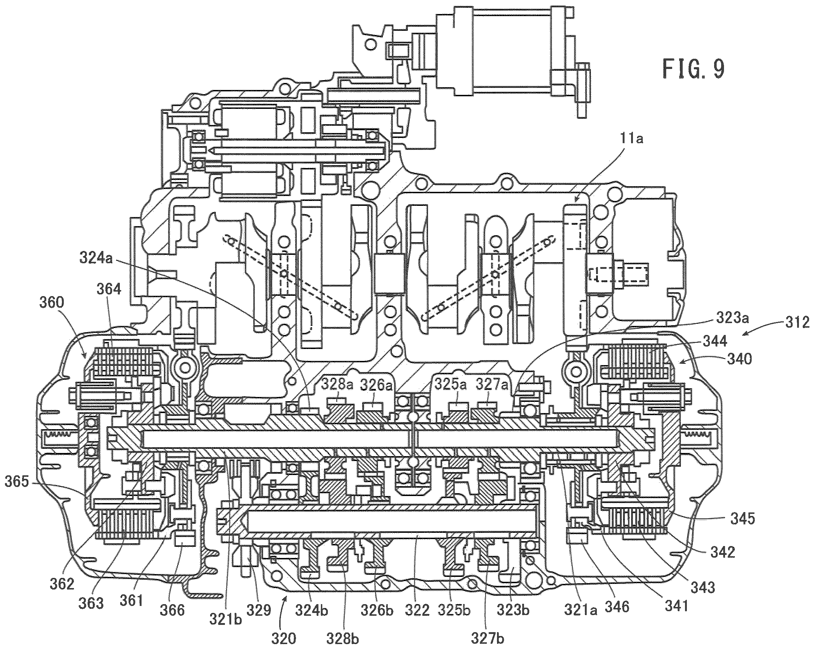

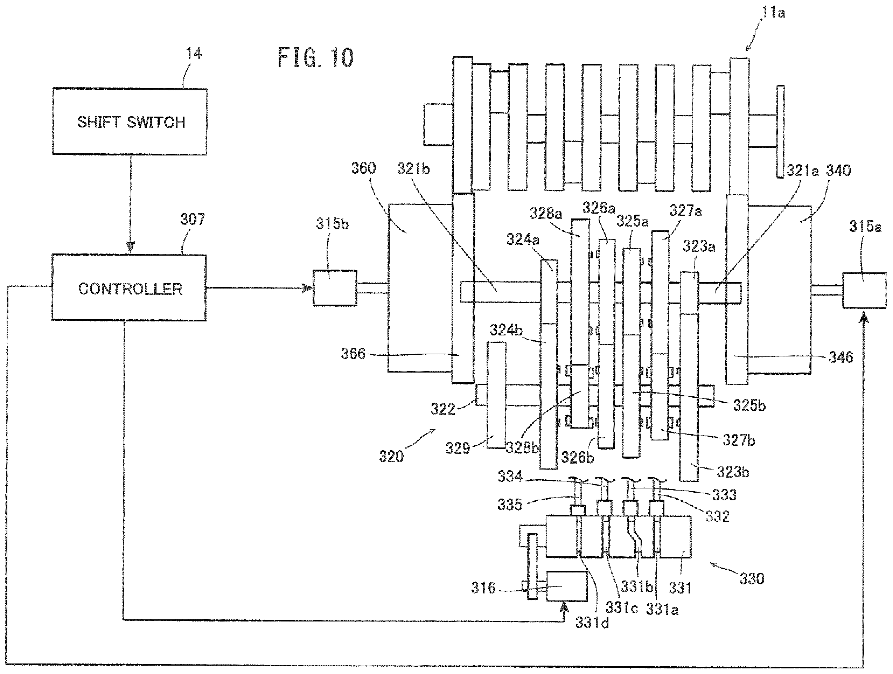

FIG. 9 illustrates a schematic configuration of a multi-stage automatic transmission 312 of a vehicle according to a second embodiment. For explanation, FIG. 10 schematically illustrates the configuration of the multi-stage automatic transmission 312. The multi-stage automatic transmission 312 of this embodiment is different from the configuration of the first embodiment in including two clutches of a first clutch 340 and a second clutch 360. In the following description, components similar to those of the first embodiment are denoted by the same reference characters and will not be described again, and only components different from those of the first embodiment will be described.

The multi-stage automatic transmission 312 includes a plurality of friction driving clutches, and achieves a smooth gear-shift by alternately performing power transfer in odd-number stages and in even-number stages out of the gear stages with the first clutch 340 and the second clutch 360. The multi-stage automatic transmission 312 includes a transmission mechanism 320, the first clutch 340, the second clutch 360, and a shift mechanism.

The transmission mechanism 320 is connected to a crankshaft 11a of an engine 11. The transmission mechanism 320 changes a torque transferred from the crankshaft 11a to a predetermined torque, and outputs the predetermined torque.

The first clutch 340 and the second clutch 360 are configured to transfer rotation of the crankshaft 11a to the transmission mechanism 320. That is, the first clutch 340 and the second clutch 360 are configured to switch between transfer and non-transfer of rotation of the crankshaft 11a to the transmission mechanism 320.

The first clutch 340 is driven by a first clutch actuator 315a described later. The first clutch 340 transfers a driving force in odd-number stages (i.e., first-speed stage, third-speed stage, and fifth-speed stage) of the transmission mechanism 320.

The second clutch 360 is driven by a second clutch actuator 315b described later. The second clutch 360 transfers a driving force in even-number stages (i.e., second-speed stage, fourth-speed stage, and six-speed stage) of the transmission mechanism 320.

The shift mechanism performs a gear-shift of the transmission mechanism 320 through a sequential shift mechanism 330 described later, and retains a gear stage selected by the transmission mechanism 320 until next gear-shift is performed by the transmission mechanism 320. A configuration of the shift mechanism is similar to the configuration of the shift mechanism 50 of the first embodiment, and thus, will not be described in detail.

As described above, a driving force is transferred to the transmission mechanism 320 of the multi-stage automatic transmission 312 from the engine 11 through the first clutch 340 or the second clutch 360.

A configuration of the multi-stage automatic transmission 312 including the transmission mechanism 320, the first clutch 340, the second clutch 360, and the shift mechanism will now be described in detail.

Each of the first clutch 340 and the second clutch 360 is, for example, a multiplate friction clutch. The first clutch 340 includes a bottomed cylindrical clutch housing 341, a bottomed cylindrical clutch boss 342, a plurality of friction plates 343 and clutch plates 344 that are friction discs, a pressure plate 345, and an input gear 346. The second clutch 360 includes a bottomed cylindrical clutch housing 361, a bottomed cylindrical clutch boss 362, a plurality of friction plates 363 and clutch plates 364 that are friction discs, a pressure plate 365, and an input gear 366.

The first clutch 340 and the second clutch 360 have the same configuration. The configuration of the first clutch 340 and the second clutch 360 is similar to the configuration of the clutch 40 in the first embodiment. Thus, the configuration of the first clutch 340 and the second clutch 360 will not be described in detail.

The clutch boss 342 of the first clutch 340 is coupled to an end portion of a first main shaft 321a described later in the transmission mechanism 320. The clutch housing 341 of the first clutch 340 is connected to the input gear 346 that meshes with a gear provided on the crankshaft 11a. The plurality of friction plates 343 are attached to the inner peripheral surface of the clutch housing 341. The plurality of clutch plates 344 are attached to the outer peripheral surface of the clutch boss 342. The friction plates 343 and the clutch plates 344 are engaged or disengaged to thereby enable the first clutch 340 to switch between transfer and non-transfer of rotation of the crankshaft 11a to the first main shaft 321a of the transmission mechanism 320.

The clutch boss 362 of the second clutch 360 is coupled to an end portion of a second main shaft 321b described later in the transmission mechanism 320. A clutch housing 361 of the second clutch 360 is connected to the input gear 366 that meshes with a gear provided on the crankshaft 11a. The plurality of friction plates 363 are attached to the inner peripheral surface of the clutch housing 361. The plurality of clutch plates 364 are attached to the outer peripheral surface of the clutch boss 362. The friction plates 363 and the clutch plates 364 are engaged or disengaged to thereby enable the second clutch 360 to switch between transfer and non-transfer of rotation of the crankshaft 11a to the second main shaft 321b of the transmission mechanism 320.

Engagement and disengagement between the friction plates 343 and the clutch plates 344 in the first clutch 340 are performed by driving the first clutch actuator 315a as illustrated in FIG. 10. Engagement and disengagement between the friction plates 363 and the clutch plates 364 in the second clutch 360 are performed by driving the second clutch actuator 315b as illustrated in FIG. 10.

The transmission mechanism 320 is a multistep transmission mechanism. The transmission mechanism 320 includes the first main shaft 321a, the second main shaft 321b, the output shaft 322, a plurality of driving gears, a plurality of driven gears, and the sequential shift mechanism 330 (see FIG. 10).

The first main shaft 321a and the second main shaft 321b are disposed on the same axis such that one end of the first main shaft 321a faces one end of the second main shaft 321b. The first main shaft 321a and the second main shaft 321b are rotatable independently of each other. The other end of the first main shaft 321a is coupled to the clutch boss 342 of the first clutch 340. The other end of the second main shaft 321b is coupled to the clutch boss 362 of the second clutch 360.

The first main shaft 321a is provided with, as part of the plurality of driving gears, a first-speed fixing gear 323a, a first spline gear 325a, and a fifth-speed gear 327a constituting each of odd-number stages including a first-speed gear, a third-speed gear, and a fifth-speed gear. The first-speed fixing gear 323a, the first spline gear 325a, and the fifth-speed gear 327a are arranged on the first main shaft 321a in the order of the first-speed fixing gear 323a, the fifth-speed gear 327a, and the first spline gear 325a from an end portion to which the first clutch 340 is connected.

The first-speed fixing gear 323a is fixed to the first main shaft 321a, and rotates together with the first main shaft 321a. The first-speed fixing gear 323a meshes with a first-speed gear 323b described later disposed on the output shaft 322.

The fifth-speed gear 327a is rotatably attached on the first main shaft 321a with movement in the axial direction restricted of the first main shaft 321a. The fifth-speed gear 327a meshes with a third spline gear 327b described later of the output shaft 322.

The first spline gear 325a is attached on the first main shaft 321a to be rotatable together with the first main shaft 321a and movable along the axial direction of the first main shaft 321a. The first spline gear 325a meshes with a third-speed gear 325b of the output shaft 322.

The first spline gear 325a is connected to a shift fork 333 described later of the sequential shift mechanism 330, and moves in the axial direction on the first main shaft 321a by movement of the shift fork 333. The first spline gear 325a moves on the first main shaft 321a as described above to thereby be connected to the fifth-speed gear 327a. Accordingly, the fifth-speed gear 327a can rotate together with the first main shaft 321a.

The second main shaft 321b is provided with, as part of the plurality of driving gears, a second-speed fixing gear 324a, a second spline gear 326a, and a sixth-speed gear 328a constituting each of even-number stages including a second-speed gear, a fourth-speed gear, and a sixth-speed gear. The second-speed fixing gear 324a, the second spline gear 326a, and the sixth-speed gear 328a are arranged on the second main shaft 321b in the order of the second-speed fixing gear 324a, the sixth-speed gear 328a, and the second spline gear 326a from an end portion to which the second clutch 360 is connected.

The second-speed fixing gear 324a is fixed to the second main shaft 321b, and rotates together with the second main shaft 321b. The second-speed fixing gear 324a meshes with a second-speed gear 324b described later disposed on the output shaft 322.

The sixth-speed gear 328a is rotatably attached on the second main shaft 321b with movement in the axial direction restricted of the second main shaft 321b. The sixth-speed gear 328a meshes with a fourth spline gear 328b described later of the output shaft 322.

The second spline gear 326a is attached on the second main shaft 321b to be rotatable together with the second main shaft 321b and movable along the axial direction of the second main shaft 321b. The second spline gear 326a meshes with a fourth-speed gear 326b of the output shaft 322.

The second spline gear 326a is connected to a shift fork 334 described later of the sequential shift mechanism 330, and moves in the axial direction on the second main shaft 321b by movement of the shift fork 334. The second spline gear 326a moves on the second main shaft 321b as described above to thereby be connected to the sixth-speed gear 328a.

Accordingly, the sixth-speed gear 328a can rotate together with the second main shaft 321b.

The output shaft 322 is provided with the first-speed gear 323b, the third spline gear 327b, the third-speed gear 325b, the fourth-speed gear 326b, the fourth spline gear 328b, the second-speed gear 324b, and a sprocket 329 in this order from a side close to the first clutch 340. The first-speed gear 323b, the third-speed gear 325b, the fourth-speed gear 326b, and the second-speed gear 324b are provided on the output shaft 322 to be rotatable with respect to the output shaft 322 with movement along the axial direction of the output shaft 322 restricted.

The third spline gear 327b and the fourth spline gear 328b are attached on the output shaft 322 to rotate together with the output shaft 322 and to be movable along the axial direction of the output shaft 322. The third spline gear 327b meshes with the fifth-speed gear 327a of the first main shaft 321a. The fourth spline gear 328b meshes with the sixth-speed gear 328a of the second main shaft 321b.

The third spline gear 327b is connected to a shift fork 332 described later of the sequential shift mechanism 330, and is caused to move on the output shaft 322 along the axial direction by movement of the shift fork 332. With this movement on the output shaft 322, the third spline gear 327b is connected to the first-speed gear 323b or the third-speed gear 325b. Accordingly, the first-speed gear 323b or the third-speed gear 325b is allowed to rotate together with the output shaft 322.

The fourth spline gear 328b is connected to a shift fork 335 described later of the sequential shift mechanism 330, and is caused to move on the output shaft 322 along the axial direction by movement of the shift fork 335. With this movement on the output shaft 322, the fourth spline gear 328b is connected to the second-speed gear 324b or the fourth-speed gear 326b. Accordingly, the second-speed gear 324b or the fourth-speed gear 326b is allowed to rotate together with the output shaft 322.

The sprocket 329 rotates together with the output shaft 322. A chain, not shown, is attached to the sprocket 329. That is, rotation of the output shaft 322 is output through the sprocket 329 and the chain.

The first spline gear 325a, the second spline gear 326a, the third spline gear 327b, and the fourth spline gear 328b function as transmission gears, and also function as dog selectors. The first spline gear 325a, the second spline gear 326a, the third spline gear 327b, and the fourth spline gear 328b move along the axial direction on the first main shaft 321a, the second main shaft 321b, or the output shaft 322 to thereby be connected to the transmission gears adjacent to these gears in the axial direction by a dog mechanism, not shown. The dog mechanism is similar to a configuration of a known dog mechanism (e.g., Japanese Patent Application Publication No. 2010-133555), and thus, will not be described in detail.

For example, in a case where the gear stage of the transmission mechanism 320 is a first speed, the first spline gear 325a on the first main shaft 321a meshes with the third-speed gear 325b on the output shaft 322. The third spline gear 327b on the output shaft 322 is connected to the first-speed gear 323b. Accordingly, the first-speed gear 323b is fixed to the output shaft 322 through the third spline gear 327b to be rotatable together with the output shaft 322. Thus, rotation is transferred from the first main shaft 321a to the output shaft 322 through the first-speed gear 323b meshing with the first-speed fixing gear 323a fixed to the first main shaft 321a. At this time, the third-speed gear 325b meshing with the first spline gear 325a on the first main shaft 321a rotates with respect to the output shaft 322.

In a case where the gear stage of the transmission mechanism 320 is a second speed, the second spline gear 326a on the second main shaft 321b meshes with the fourth-speed gear 326b on the output shaft 322. The fourth spline gear 328b on the output shaft 322 is connected to the second-speed gear 324b. Accordingly, the second-speed gear 324b is fixed to the output shaft 322 through the fourth spline gear 328b to be rotatable together with the output shaft 322. Thus, rotation is transferred from the second main shaft 321b to the output shaft 322 through the second-speed gear 324b meshing with the second-speed fixing gear 324a fixed to the second main shaft 321b. At this time, the fourth-speed gear 326b meshing with the second spline gear 326a on the second main shaft 321b rotates with respect to the output shaft 322.

In a case where the gear stage of the transmission mechanism 320 is a third speed, the first spline gear 325a on the first main shaft 321a meshes with the third-speed gear 325b on the output shaft 322. The third spline gear 327b on the output shaft 322 is connected to the third-speed gear 325b. Accordingly, the third-speed gear 325b is fixed to the output shaft 322 through the third spline gear 327b to be rotatable together with the output shaft 322. Thus, rotation is transferred from the first main shaft 321a to the output shaft 322 through the third-speed gear 325b meshing with the first spline gear 325a that rotates together with the first main shaft 321a.

In a case where the gear stage of the transmission mechanism 320 is a fourth speed, the second spline gear 326a on the second main shaft 321b meshes with the fourth-speed gear 326b on the output shaft 322. The fourth spline gear 328b on the output shaft 322 is connected to the fourth-speed gear 326b. Accordingly, the fourth-speed gear 326b is fixed to the output shaft 322 through the fourth spline gear 328b to be rotatable together with the output shaft 322. Thus, rotation is transferred from the second main shaft 321b to the output shaft 322 through the fourth-speed gear 326b meshing with the second spline gear 326a that rotates together with the second main shaft 321b.

In a case where the gear stage of the transmission mechanism 320 is a fifth speed, the first spline gear 325a on the first main shaft 321a is connected to the fifth-speed gear 327a. Accordingly, the fifth-speed gear 327a is fixed to the first main shaft 321a through the first spline gear 325a to be rotatable together with the first main shaft 321a. The third spline gear 327b on the output shaft 322 meshes with the fifth-speed gear 327a on the first main shaft 321a at a position at which the third spline gear 327b is connected to none of the first-speed gear 323b and the third-speed gear 325b. Thus, rotation is transferred from the first main shaft 321a to the output shaft 322 through the fifth-speed gear 327a connected to the first spline gear 325a that rotates together with the first main shaft 321a and through the third spline gear 327b on the output shaft 322.

In a case where the gear stage of the transmission mechanism 320 is a sixth speed, the second spline gear 326a on the second main shaft 321b is connected to the sixth-speed gear 328a. Accordingly, the sixth-speed gear 328a is fixed to the second main shaft 321b through the second spline gear 326a to be rotatable together with the second main shaft 321b. The fourth spline gear 328b on the output shaft 322 meshes with the sixth-speed gear 328a on the second main shaft 321b at a position at which the fourth spline gear 328b is connected to none of the second-speed gear 324b and the fourth-speed gear 326b. Thus, rotation is transferred from the second main shaft 321b to the output shaft 322 through the sixth-speed gear 328a connected to the second spline gear 326a that rotates together with the second main shaft 321b and through the fourth spline gear 328b on the output shaft 322.

The sequential shift mechanism 330 includes a shift cam 331 and the shift forks 332 through 335. As illustrated in FIG. 10, cam grooves 331a through 331d are formed on the outer peripheral surface of the shift cam 331 of the sequential shift mechanism 330. The cam grooves 331a through 331d are arranged along the axial direction of the shift cam 331 and each extend circumferentially on the outer peripheral surface of the shift cam 331. Each of the cam grooves 331a through 331d is disposed on the outer peripheral surface of the shift cam 331 such that the position of the shift cam 331 in the axial direction changes in accordance with the position of the shift cam 331 in the circumferential direction. One end of each of the shift forks 332 through 335 is located on an associated one of the cam grooves 331a through 331d. Configurations of the cam grooves 331a through 331d of this embodiment are similar to those of known cam grooves (e.g., Japanese Patent Application Publication No. 2010-133555), and thus, will not be described in detail.

The other end of the shift fork 332 is connected to the third spline gear 327b. The other end of the shift fork 333 is connected to the first spline gear 325a. The other end of the shift fork 334 is connected to the second spline gear 326a. The other end of the shift fork 335 is connected to the fourth spline gear 328b. Accordingly, when the shift forks 332 through 335 move in the axial direction along the cam grooves 331a through 331d of the shift cam 331, the first spline gear 325a, the second spline gear 326a, the third spline gear 327b, and the fourth spline gear 328b also move in the axial direction. A driving force in a rotation direction is applied to the shift cam 331 by a shift actuator 316.

As described above, with the movement of the first spline gear 325a, the second spline gear 326a, the third spline gear 327b, and the fourth spline gear 328b in accordance with the movement of the shift forks 332 through 335, changing to each gear stage is performed in the transmission mechanism 320 as described above.

In the multi-stage automatic transmission 312 having the configuration described above, in changing the gear stages in response to an operation of a shift switch 14 by a driver, the shift actuator 316, the first clutch actuator 315a, and the second clutch actuator 315b are driven and controlled by the controller 307. That is, the controller 307 outputs control signals to the shift actuator 316, the first clutch actuator 315a, and the second clutch actuator 315b.

The controller 307 disengages one of the first clutch 340 or the second clutch 360, and then, changes the gear stage on one of the first main shaft 321a or the second main shaft 321b connected to the disengaged clutch. Thereafter, the controller 307 causes the disengaged one of the first clutch 340 or the second clutch 360 to transition from the disengaged state to an engaged state through a semi-clutch state, while causing the engaged one of the first clutch 340 or the second clutch 360 to transition from the engaged state to the disengaged state through the semi-clutch state.

As one example of a gear-shift operation of the multi-stage automatic transmission 312, a case of shifting up the gear stage from a second speed to a third speed will be described. In this embodiment, the vehicle includes the shift switch 14 for allowing a driver to instruct changing of the gear stages to the multi-stage automatic transmission 312.

When the driver of the vehicle operates the shift switch 14 to perform a shift-up from the second speed to the third speed, the controller 307 controls driving of the first clutch actuator 315a so as to disengage the first clutch 340. Accordingly, torque transferred from the crankshaft 11a to the first main shaft 321a by way of the first clutch 340 is blocked. In this case, a torque of the crankshaft 11a is transferred to the output shaft 322 through the second clutch 360, the second main shaft 321b, the second-speed fixing gear 324a, the second-speed gear 324b, and the fourth spline gear 328b.

Next, the controller 307 controls driving of the shift actuator 316 to thereby cause the shift cam 331 to rotate by a predetermined angle. Accordingly, the shift fork 332 moves in the axial direction and connects the third spline gear 327b on the output shaft 322 to the third-speed gear 325b. Thus, the first main shaft 321a and the output shaft 322 are connected to each other to enable torque transfer through the first spline gear 325a, the third-speed gear 325b, and the third spline gear 327b. It should be noted that since the first clutch 340 is disengaged as described above, a torque of the crankshaft 11a is not transferred from the first main shaft 321a to the output shaft 322.

The controller 307 controls driving of the first clutch actuator 315a and the second clutch actuator 315b to thereby cause the first clutch 340 to transition from the disengaged state to the engaged state through the semi-clutch state, while causing the second clutch 360 to transition from the engaged state to the disengaged state through the semi-clutch state.

In this case, a torque transferred from the crankshaft 11a to the output shaft 322 through the first clutch 340, the first main shaft 321a, the first spline gear 325a, the third-speed gear 325b, and the third spline gear 327b gradually increases. On the other hand, a torque transferred from the crankshaft 11a to the output shaft 322 through the second clutch 360, the second main shaft 321b, the second-speed fixing gear 324a, the second-speed gear 324b, and the fourth spline gear 328b gradually decreases, and becomes zero when the second clutch 360 becomes in a disengaged state.

As described above, in the multi-stage automatic transmission 312 of this embodiment, by changing the gear stages by using two clutches of the first clutch 340 and the second clutch 360, it is possible to prevent a torque from abruptly changing in changing the gear stages.

In the multi-stage automatic transmission 312 of this embodiment, at least one of the first clutch 340 or the second clutch 360 is always in the engaged state, and thus, a decrease in a driving force by clutch disengagement as described in the multi-stage automatic transmission 12 of the first embodiment does not occur.

The controller 307 of the multi-stage automatic transmission 312 having the configuration of this embodiment has a configuration similar to that of the controller 7 of the first embodiment. That is, the controller 307 includes a lean angle calculator 70, a lean determiner 71, an engine speed threshold setter 72, a gear-shift control determiner 73, and a gear-shift signal generator 74. Configurations of these components are similar to those in the first embodiment, and thus, will not be described in detail.

Similar to the controller 7 of the first embodiment, the controller 307 of this embodiment changes the engine speed threshold at which a driving force is put in a non-transfer state in the multi-stage automatic transmission 312, based on a lean angle of a vehicle. Note that, in the multi-stage automatic transmission 312, in a case where both of the first clutch 340 and the second clutch 360 are in a disengaged state, in a case where the first clutch 340 is in a disengaged state and a driving force is not transferred in the even-number stages of the transmission mechanism 320 (in a case where the even-number stages are neutral), or in a case where the second clutch 360 is in a disengaged state and a driving force is not transferred in the odd-number stages of the transmission mechanism 320 (in a case where the odd-number stages are neutral), the driving force is in a non-transfer state.

If the lean angle is smaller than the lean angle threshold, that is, if it is determined that the vehicle 1 is travelling in an upright state, the controller 307 sets the engine speed threshold at which a driving force is put in a non-transfer state in the multi-stage automatic transmission 312 to the first engine speed threshold. On the other hand, if the lean angle is the lean angle threshold or more, that is, if it is determined that the vehicle 1 is turning in a lean state, the controller 307 sets the engine speed threshold at which a driving force is put in a non-transfer state in the multi-stage automatic transmission 312 to the second engine speed threshold that is smaller than the first engine speed threshold. Thus, a driving force can be made less likely to be put in a non-transfer state in the multi-stage automatic transmission 312 while the vehicle 1 is turning in a lean state.

Accordingly, the posture of the vehicle can be easily controlled while the vehicle 1 is turning in a lean state.

Note that the controller 307 may have a configuration in which whether the vehicle 1 is turning in a lean state is determined based on the yaw rate of the vehicle 1 as in the variation of the first embodiment.

### (Other Embodiments)

The embodiments of the present teaching have been described above, but the above-described embodiments are merely examples for carrying out the present teaching.

In the embodiments described above, each of the controllers 7, 107, and 307 determines whether the vehicle 1 is turning in a lean state using one of the lean angle or the yaw rate of the vehicle 1. Alternatively, the controller may be configured to determine whether the vehicle is turning in a lean state using both the lean angle and the yaw rate. As another option, the controller may be configured to determine whether the vehicle is turning in a lean state using some other parameter related to a behavior of the vehicle.

In the first embodiment, the controller 7 calculates the lean angle from the lean angular velocity of the vehicle 1 detected by the lean detector 61 by the lean angle calculator 70. Alternatively, the controller may be configured to calculate the lean angle, based on a difference between the rotation speed of the front wheel and the rotation speed of the rear wheel.

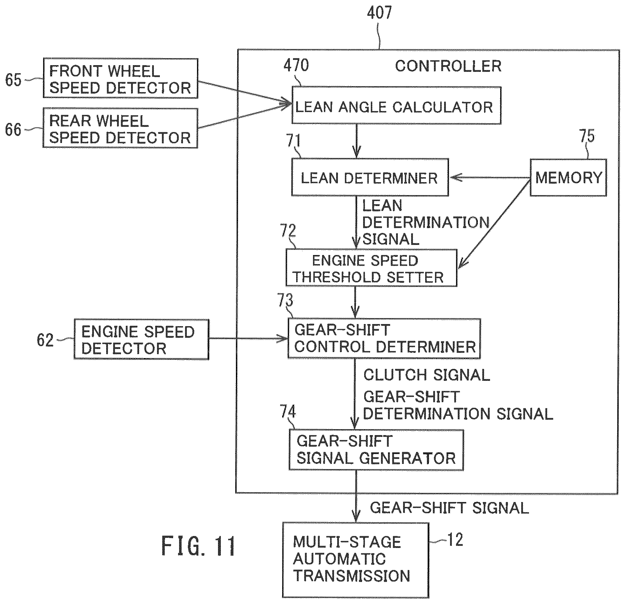

Specifically, as illustrated in FIG. 11, the vehicle includes a front wheel speed detector 65 configured to detect the rotation speed of the front wheel, a rear wheel speed detector 66 configured to detect the rotation speed of the rear wheel, and a controller 407 configured to control driving of the multi-stage automatic transmission 12. Each of the front wheel speed detector 65 and the rear wheel speed detector 66 may have any configuration as long as the front wheel speed detector 65 and the rear wheel speed detector 66 can detect the respective rotation speeds of the front wheel and the rear wheel, respectively.

The controller 407 includes a lean angle calculator 470 configured to calculate the lean angle of the vehicle using the difference between the rotation speed of the front wheel detected by the front wheel speed detector 65 and the rotation speed of the rear wheel detected by the rear wheel speed detector 66. Accordingly, each of the front wheel speed detector 65 and the rear wheel speed detector 66 function as a vehicle body posture detector that detects the posture of the vehicle body 2.

The lean angle of the vehicle can be easily obtained by calculating the lean angle as described above.

Note that, similar to the first embodiment, the controller 407 includes the lean determiner 71, the engine speed threshold setter 72, the gear-shift control determiner 73, the gear-shift signal generator 74, and the memory 75. The lean determiner 71, the engine speed threshold setter 72, the gear-shift control determiner 73, the gear-shift signal generator 74, and the memory 75 have configurations similar to those of the first embodiment, and therefore, the detailed description thereof will be omitted.

In the embodiments described above, if it is determined that the vehicle 1 is not turning in a lean state, each of the controller 7, 107, 307, and 407 sets the engine speed threshold at which a corresponding one of the clutch 40, 340, and 360 of the multi-stage automatic transmission 12 and 312 is disengaged to the first engine speed threshold. Alternatively, the engine speed threshold may have the first engine speed threshold as a default value.

In the embodiments described above, a driving force is transferred to the rear wheel 4 of the vehicle 1 from the engine unit 10. Alternatively, a driving force may be transferred to the front wheel of the vehicle from the engine unit. In this case, the multi-stage automatic transmission changes a driving force transferred from the engine to the front wheel.

In the embodiments described above, the vehicle 1 includes the engine 11 as a driving source. Alternatively, the driving source of the vehicle may be a motor. The driving source may be a hybrid system obtained by combining an engine and a motor.

In the embodiments described above, examples of the multi-stage automatic transmission are described. Alternatively, the multi-stage automatic transmission may be a transmission with any configuration as long as the transmission has a configuration including at least one clutch and a plurality of gear stages and capable of automatically changing the gear stages stepwise.

In the embodiments described above, the multi-stage automatic transmissions 12 and 312 are six-speed transmissions. Alternatively, the multi-stage automatic transmission may be a transmission for five speeds or less, or a transmission for seven or more speeds.

In the embodiments described above, motorcycles have been described as examples of the vehicle. The vehicle, however, may be a vehicle other than motorcycles as long as the vehicle is a leaning vehicle including a multi-stage automatic transmission. The vehicle may include a plurality of wheels including a front wheel and a rear wheel.

### REFERENCE SIGNS LIST

- 1: Vehicle (Leaning vehicle)
- 2: Vehicle body
- 3: Front wheel
- 4: Rear wheel
- 7, 107, 307, 407: Controller (gear-shift controller)
- 10: Engine unit
- 11: Engine (driving source)
- 11a: Crank shaft
- 12, 312: Multi-stage automatic transmission
- 14: Shift switch
- 15: Clutch actuator
- 16, 316: Shift actuator
- 20, 320: Transmission mechanism
- 21: Main shaft
- 22: Output shaft
- 23: Driving gear
- 24: Driven gear
- 30, 330: Sequential shaft mechanism
- 40: Clutch
- 46: Input gear
- 50: Shift mechanism
- 61: Lean detector (vehicle body posture detector)
- 62: Engine speed detector
- 65: Front wheel speed detector
- 66: Rear wheel speed detector
- 70, 470: Lean angle calculator
- 71, 171: Lean determiner
- 72, 172: Engine speed threshold setter
- 73: Gear-shift control determiner
- 74: Gear-shift signal generator
- 75: Memory
- 315a: First clutch actuator
- 315b: Second clutch actuator
- 321a: First main shaft
- 321b: Second main shaft
- 322: Output shaft
- 323a: First-speed fixing gear
- 323b: First-speed gear
- 324a: Second-speed fixing gear
- 324b: Second-speed gear
- 325a: First spline gear
- 325b: Third-speed gear
- 326a: Second spline gear
- 326b: Fourth-speed gear
- 327a: Fifth-speed gear
- 327b: Third spline gear
- 328a: Sixth-speed gear
- 328b: Fourth spline gear
- 329: Sprocket
- 340: First clutch
- 360: Second clutch

## Claims

1. A leaning vehicle (1) that is configured to lean leftward when turning to the left and to lean rightward when turning to the right, the leaning vehicle (1) comprising:
a vehicle body (2);
a plurality of wheels (3, 4) including a front wheel (3) and a rear wheel (4);
a driving source (11) configured to supply a driving force to at least one of the front wheel (3) or the rear wheel (4);
a vehicle body posture detector (61) configured to detect a posture of the vehicle body (2);
a gear-type multi-stage automatic transmission (12, 312) including a plurality of gear stages and a clutch (40, 340, 360) configured to switch between a transfer state and a non-transfer state of the driving force from the driving source (11) to the plurality of gear stages, and configured to change the driving force that is transferred to at least one of the front wheel (3) or the rear wheel (4) from the driving source (11) by automatically changing the plurality of gear stages stepwise; and
a gear-shift controller (7, 107, 307, 407) configured to control changing of the plurality of gear stages in the multi-stage automatic transmission (12, 312) and, if rotation speed of the driving source (11) is smaller than a threshold, put the driving force in the non-transfer state in the multi-stage automatic transmission (12, 312),
**characterized in that**
the gear-shift controller (7, 107, 307, 407) is configured to set, if it is determined based on a detection result of the vehicle body posture detector (61) that the leaning vehicle (1) is travelling in an upright state, the threshold at which the driving force is put in the non-transfer state in the multi-stage automatic transmission (12, 312) to a first threshold and to set, if it is determined based on the detection result of the vehicle body posture detector (61) that the leaning vehicle (1) is turning in a lean state, the threshold at which the driving force is put in the non-transfer state in the multi-stage automatic transmission (12, 312) to a second threshold that is smaller than the first threshold.

2. The leaning vehicle (1) according to claim 1,
wherein the gear-shift controller (7, 107, 307, 407) is configured to set, if a lean angle obtained from the detection result of the vehicle body posture detector (61) is a lean angle threshold or more, the threshold at which the driving force is put in the non-transfer state in the multi-stage automatic transmission (12, 312) to the second threshold that is smaller than the first threshold.

3. The leaning vehicle (1) according to claim 2,
wherein the vehicle body posture detector (61) includes
a front wheel speed detector (65) configured to detect rotation speed of the front wheel (3), and
a rear wheel speed detector (66) configured to detect rotation speed of the rear wheel (4), and
the gear-shift controller (7, 107, 307, 407) is configured to calculate the lean angle, based on a difference between the rotation speed of the front wheel (3) detected by the front wheel speed detector (65) and the rotation speed of the rear wheel (4) detected by the rear wheel speed detector (66).

4. The leaning vehicle (1) according to any one of claims 1 to 3,
wherein the gear-shift controller (7, 107, 307, 407) is configured to set, if a yaw rate obtained from the detection result of the vehicle body posture detector (61) is a yaw rate threshold or more, the threshold at which the driving force is put in the non-transfer state in the multi-stage automatic transmission (12, 312) to the second threshold that is smaller than the first threshold.

## Patentansprüche

1. Ein Neigungsfahrzeug (1), das dazu ausgebildet ist, sich beim Abbiegen nach links nach links zu neigen und sich beim Abbiegen nach rechts nach rechts zu neigen, wobei das Neigungsfahrzeug (1) folgende Merkmale aufweist:
einen Fahrzeugkörper (2);
eine Mehrzahl von Rädern (3, 4) mit einem Vorderrad (3) und einem Hinterrad (4);
eine Antriebsquelle (11), die dazu ausgebildet ist, eine Antriebskraft an zumindest eines des Vorderrads (3) oder des Hinterrads (4) zu liefern;
einen Fahrzeugkörper-Haltungsdetektor (61), der dazu ausgebildet ist, eine Haltung des Fahrzeugkörpers zu erfassen;
ein Zahnradtyp-Mehrstufen-Automatikgetriebe (12, 312) mit einer Mehrzahl von Getriebestufen und einer Kupplung (40, 340, 360), die dazu ausgebildet ist, zwischen einem Übertragungszustand und einem Nichtübertragungszustand der Antriebskraft von der Antriebsquelle (11) auf die Mehrzahl von Getriebestufen zu schalten, und dazu ausgebildet ist, die Antriebskraft, die von der Antriebsquelle (11) auf zumindest eines des Vorderrads (3) oder des Hinterrads (4) übertragen wird, durch automatisches stufenweises Ändern der Mehrzahl von Getriebestufen zu ändern; und
eine Gangschalt-Steuerung (7, 107, 307, 407), die dazu ausgebildet ist, ein Ändern der Mehrzahl von Getriebestufen in dem Mehrstufen-Automatikgetriebe (12, 312) zu steuern und, wenn eine Drehgeschwindigkeit der Antriebsquelle (11) kleiner ist als eine Schwelle, die Antriebskraft in den Nichtübertragungszustand in dem Mehrstufen-Automatikgetriebe (12, 312) zu bringen,
**dadurch gekennzeichnet, dass**
die Gangschalt-Steuerung (7, 107, 307, 407) dazu ausgebildet ist, wenn basierend auf einem Erfassungsergebnis des Fahrzeugkörper-Haltungsdetektors (61) bestimmt wird, dass das Neigungsfahrzeug (1) sich in einem aufrechten Zustand bewegt, die Schwelle, bei der die Antriebskraft in den Nichtübertragungszustand in dem Mehrstufen-Automatikgetriebe (12, 312) gebracht wird, auf eine erste Schwelle einzustellen und, wenn basierend auf dem Erfassungsergebnis des Fahrzeugkörper-Haltungsdetektors (61) bestimmt wird, dass das Neigungsfahrzeug (1) in einem Neigungszustand abbiegt, die Schwelle, bei der die Antriebskraft in den Nichtübertragungszustand in dem Mehrstufen-Automatikgetriebe (12, 312) gebracht wird, auf eine zweite Schwelle einzustellen, die kleiner ist als die erste Schwelle.

2. Das Neigungsfahrzeug (1) gemäß Anspruch 1,
bei dem die Gangschalt-Steuerung (7, 107, 307, 407) dazu ausgebildet ist, wenn ein Neigungswinkel, der aus dem Erfassungsergebnis des Fahrzeugkörper-Haltungsdetektors (61) erhalten wird, eine Neigungswinkelschwelle oder mehr ist, die Schwelle, bei der die Antriebskraft in den Nichtübertragungszustand in dem Mehrstufen-Automatikgetriebe (12, 312) gebracht wird, auf die zweite Schwelle einzustellen, die kleiner ist als die erste Schwelle.

3. Das Neigungsfahrzeug (1) gemäß Anspruch 2,
bei dem der Fahrzeugkörper-Haltungsdetektor (61) Folgendes aufweist:
einen Vorderrad-Geschwindigkeitsdetektor (65), der dazu ausgebildet ist, eine Drehgeschwindigkeit des Vorderrads (3) zu erfassen, und
einen Hinterrad-Geschwindigkeitsdetektor (66), der dazu ausgebildet ist, eine Drehgeschwindigkeit des Hinterrads (4) zu erfassen, und
die Gangschalt-Steuerung (7, 107, 307, 407) dazu ausgebildet ist, den Neigungswinkel basierend auf einer Differenz zwischen der Drehgeschwindigkeit des Vorderrads (3), die durch den Vorderrad-Geschwindigkeitsdetektor (65) erfasst wird, und der Drehgeschwindigkeit des Hinterrads (4) zu berechnen, die durch den Hinterrad-Geschwindigkeitsdetektor (66) erfasst wird.

4. Das Neigungsfahrzeug (1) gemäß einem der Ansprüche 1 bis 3,
bei dem die Gangschalt-Steuerung (7, 107, 307, 407) dazu ausgebildet ist, wenn eine Gierrate, die aus dem Erfassungsergebnis des Fahrzeugkörper-Haltungsdetektors (61) erhalten wird, eine Gierratenschwelle oder mehr ist, die Schwelle, bei der die Antriebskraft in den Nichtübertragungszustand in dem Mehrstufen-Automatikgetriebe (12, 312) gebracht wird, auf die zweite Schwelle einzustellen, die kleiner ist als die erste Schwelle.

## Revendications

1. Véhicule à inclinaison (1) qui est configuré pour s'incliner vers la gauche lors d'un virage à gauche et pour s'incliner vers la droite lors d'un virage à droite, le véhicule à inclinaison (1) comprenant:
une carrosserie de véhicule (2);
une pluralité de roues (3, 4) comportant une roue avant (3) et une roue arrière (4);
une source d'entraînement (11) configurée pour alimenter une force d'entraînement vers au moins l'une parmi la roue avant (3) ou la roue arrière (4);
un détecteur de posture de carrosserie de véhicule (61) configuré pour détecter une posture de la carrosserie de véhicule (2);
une transmission automatique à étages multiples de type à engrenages (12, 312) comportant une pluralité d'étages d'engrenage et un embrayage (40, 340, 360) configuré pour commuter entre un état de transfert et un état de non-transfert de la force d'entraînement de la source d'entraînement (11) à la pluralité d'étages d'engrenage, et configurée pour modifier la force d'entraînement qui est transférée à au moins l'une parmi la roue avant (3) ou la roue arrière (4) à partir de la source motrice (11) en modifiant automatiquement par étape la pluralité d'étages d'engrenage; et
un moyen de commande de changement de vitesse (7, 107, 307, 407) configuré pour commander le changement de la pluralité d'étages d'engrenage dans la transmission automatique à étages multiples (12, 312) et, si la vitesse de rotation de la source d'entraînement (11) est inférieure à un seuil, pour amener la force d'entraînement à l'état de non-transfert dans la transmission automatique à étages multiples (12, 312),
**caractérisé par le fait que** le moyen de commande de changement de vitesse (7, 107, 307, 407) est configuré pour régler, s'il est déterminé sur base d'un résultat de détection du détecteur de posture de carrosserie de véhicule (61), que le véhicule à inclinaison (1) se déplace dans un état vertical, le seuil auquel la force d'entraînement est amenée à l'état de non-transfert dans la transmission automatique à étages multiples (12, 312) à un premier seuil et pour régler, s'il est déterminé sur base du résultat de détection détecteur de posture de carrosserie de véhicule (61), que le véhicule à inclinaison (1) tourne dans un état d'inclinaison, le seuil auquel la force d'entraînement est amenée à l'état de non-transfert dans la transmission automatique à étages multiples (12, 312) à un deuxième seuil qui est inférieur au premier seuil.

2. Véhicule à inclinaison (1) selon la revendication 1,
dans lequel le moyen de commande de changement de vitesse (7, 107, 307, 407) est configuré pour régler, si un angle d'inclinaison obtenu à partir du résultat de détection du détecteur de posture de carrosserie de véhicule (61) est un seuil d'angle d'inclinaison ou supérieur, le seuil auquel la force d'entraînement est amenée à l'état de non-transfert dans la transmission automatique à étages multiples (12, 312) au deuxième seuil inférieur au premier seuil.

3. Véhicule à inclinaison (1) selon la revendication 2,
dans lequel le détecteur de posture de carrosserie de véhicule (61) comporte
un détecteur de vitesse de roue avant (65) configuré pour détecter la vitesse de rotation de la roue avant (3), et
un détecteur de vitesse de roue arrière (66) configuré pour détecter la vitesse de rotation de la roue arrière (4), et
le moyen de commande de changement de vitesse (7, 107, 307, 407) est configuré pour calculer l'angle d'inclinaison, sur base d'une différence entre la vitesse de rotation de la roue avant (3) détectée par le détecteur de vitesse de roue avant (65) et la vitesse de rotation de la roue arrière (4) détectée par le détecteur de vitesse de roue arrière (66).

4. Véhicule à inclinaison (1) selon l'une quelconque des revendications 1 à 3,
dans lequel le moyen de commande de changement de vitesse (7, 107, 307, 407) est configuré pour régler, si un taux de lacet obtenu à partir du résultat de détection du détecteur de posture de carrosserie de véhicule (61) est un seuil de taux de lacet ou supérieur, le seuil auquel la force d'entraînement est amenée à l'état de non-transfert dans la transmission automatique à étages multiples (12, 312) au deuxième seuil qui est inférieur au premier seuil.
